# EUROPEAN PATENT APPLICATION

(11) **EP 2 367 295 A1**
(43) Date of publication of application: **21.09.2011**
(21) Application number: 10196651.3
(22) Date of filing: 22.12.2010
(51) Int. Cl.: H04B 7/15, H04W 8/00

(54) **Multi-hop communication method for OFDMA/TDD system and transmission method of terminal**

(30) Priority: 05.03.2010 KR 20100020130
(71) Applicant: LIG Nex1 CO, Ltd., Gangnam-gu, Seoul 135-080 (KR)
(72) Inventor: Kang, Hae Lynn, Seoul (KR); Mah, Bak Il, Gyeonggi-do (KR); Kang, Surk Jin, Gyeonggi-do (KR); Chun, Phil Seong, Gyeonggi-do (KR)
(74) Representative: Capasso, Olga

(57) **Abstract**

Provided are a multi-hop communication method for an OFDMA/TDD system and a transmission method of a terminal in which a terminal transmission frame is made including a plurality of relay links and a plurality of data transmission links, the method including: (a) receiving data from other terminals through any one of the relay links and storing data in a buffer when the relay link generates data to be transmitted to a base station; and (b) selectively transmitting the stored data to the base station through any one of the data transmission links according to the number of hops to the base station or transmitting the stored data to other terminals through other relay links among the relay links.

## Description

### BACKGROUND OF THE INVENTION

### 1. Field of the Invention

The present invention relates to a communication method in an orthogonal frequency division multiple access (OFDMA), and more particularly, to a multi-hop communication method in a time division duplexing (TDD) manner-based OFDMA system.

### 2. Description of the Related Art

Recently, active researches on OFDM transmission methods useful for high-speed data transmission through a wireless channel in a mobile communication system are being conducted. The OFDM method is a method transmitting data using a multi-carrier, which is one kind of a multi-carrier modulation (MCM) method for parallel-converting symbol streams input in series and modulating and transmitting each of the parallel-converted symbol streams into a plurality of sub-carriers having orthogonality, that is, a plurality of sub-carrier channels.

TDD is one of methods discriminating uplink and downlink and is researched and applied to a mobile internet using 2.3GHz band similar to Wibro and is even applied to ultra mobile broadband systems.

The TDD method is a method of supporting bidirectional transmission that increases the efficiency of frequency used by using the same frequency band in transmitting and receiving data between a base station and mobile terminals and allocates different slots in time.

However, the existing TDD-based OFDMA systems cannot support multi-hop communication of 3 or more hops and guarantee QoS for real-time data transmission while terminal devices are moving. For example, Wibro systems use a relay station for 2-hop communication between a base station and a terminal. Further, an IEEE 802.11 DCF-based multi-hop network is a backoff-based carrier sense multiple access with collision avoidance (CSMA/CA) scheme and does not limit the number of hops but cannot guarantee the QoS since each terminal probabilistically occupies channels.

### SUMMARY OF THE INVENTION

The present invention has been made in an effort to provide a new multi-hop communication method without limiting the number of hops in a TDD-based OFDMA system.

An exemplary embodiment of the present invention provides a multi-hop communication method for an OFDMA/TDD system and a transmission method of a terminal in which a transmission frame is made including a plurality of relay links and a plurality of data transmission links, the method including: (a) receiving data from other terminals through any one of the relay links and storing data in a buffer when the relay link generates data to be transmitted to a base station; and (b) selectively transmitting the stored data to the base station through any one of the data transmission links according to the number of hops to the base station or transmitting the stored data to other terminals through other relay links among the relay links.

The step (b) may include: (b1) transmitting the stored data to the base station through any one data transmission link when the number of hops to the base station is 1; and (b2) transmitting the stored data to other terminals through other relay links when the number of hops to the base station is not 1.

The plurality of relay links may have the same frequency band and different time bands.

The plurality of data transmission links may have the same time band and different frequency bands.

Another exemplary embodiment of the present invention provides a multi-hop communication method for an OFDMA/TDD system in which a transmission frame consists of a plurality of relay links and a plurality of data transmission links, the method including: (a) transmitting a first data of a first terminal to a third terminal through a first relay link by the first terminal; (b) transmitting a second data of a second terminal to the third terminal through a second relay link by the second terminal; and (c) transmitting each of the first data, the second data, and the third data of a third terminal to the base station through a first data transmission link, a second data transmission link, and a third data transmission link by the third terminal.

The first relay link and the second relay link may have the same frequency band and different time bands.

The first data transmission link, the second data transmission link, and the third data transmission link may have the same time band and different frequency bands.

Yet another exemplary embodiment of the present invention provides a multi-hop communication method for an OFDMA/TDD system in which a transmission frame consists of a plurality of relay links and a plurality of data transmission links, the method including: (a) transmitting a first data of a first terminal to a second terminal through a first relay link by the first terminal; (b) transmitting each of the first data and the second data of the second terminal to the third terminal through a second relay link and a third relay link by the second terminal; and (c) transmitting each of the first data, the second data, and the third data of a third terminal to the base station through a first data transmission link, a second data transmission link, and a third data transmission link by the third terminal.

The first relay link, the second relay link, and the third relay link may have the same frequency band and different time bands.

The first data transmission link, the second data transmission link, and the third data transmission link may have the same time band and different frequency bands.

According to exemplary embodiments of the present invention, it can perform the multi-hop communication without limiting the number of hops in the TDD-based OFDMA system.

### BRIEF DESCRIPTION OF THE DRAWINGS

FIG. 1 is a diagram showing an OFDMA/TDD system according to an exemplary embodiment of the present invention;
FIG. 2 shows a TDD frame architecture for multi-hop communication in the OFDMA/TDD system according to an exemplary embodiment of the present invention;
FIG. 3 is a flow chart showing a data transmission process performed in any terminal for multi-hop communication in the OFDMA/TDD system according to an exemplary embodiment of the present invention;
FIG. 4 is a diagram showing a process in which 1-hop communication is made according to the multi-hop communication method in the OFDMA/TDD system according to an exemplary embodiment of the present invention;
FIG. 5 shows the process in a time-frequency graph;
FIG. 6 is a diagram showing a process in which 2-hop communication is made according to the multi-hop communication method in the OFDMA/TDD system according to an exemplary embodiment of the present invention;
FIG. 7 shows it in a time-frequency graph;
FIG. 8 is a diagram showing a process in which 3-hop communication is made according to the multi-hop communication method in the OFDMA/TDD system according to an exemplary embodiment of the present invention; and FIG. 9 shows the process in a time-frequency graph.

### DETAILED DESCRIPTION OF THE EMBODIMENTS

Hereinafter, exemplary embodiments of the present invention will be described with reference to the accompanying drawings. In the following description and drawings, like components refer to like reference numerals and therefore, the duplicated description thereof will be omitted. In addition, the detailed description of known functions and configurations will be omitted so as not to obscure the subject of the present invention with unnecessary detail.

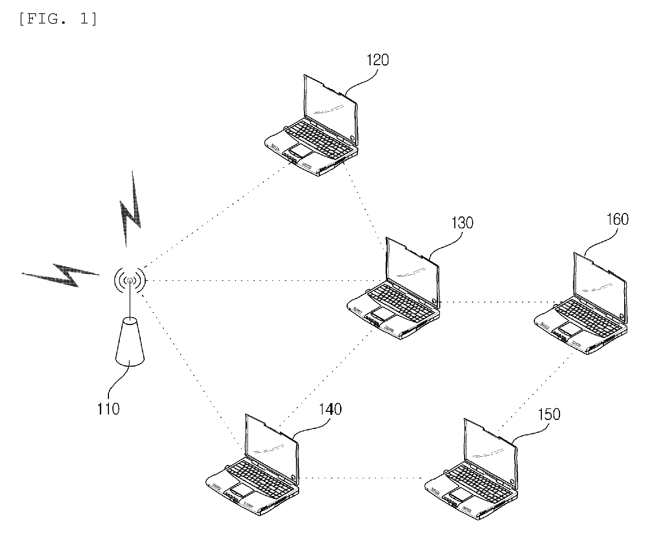

FIG. 1 is a diagram showing an OFDMA/TDD system according to an exemplary embodiment of the present invention. In an OFDMA/TDD system according to an exemplary embodiment of the present invention, a base station 110 and a plurality of mobile terminals 120, ..., 160 configures one network, as shown in FIG. 1. The base station 110 and the terminals 120, ..., 160 exchange information by using a control link and an ad-hoc link and periodically configure and manage a network. The base station 110 continuously collects the link status information of the terminals by using the control link and the ad-hoc link and searches an optimal path for multi-hop data transmission and thus, allocates a relay link and a data transmission link to each terminal. The relay link and the data transmission link will be described below.

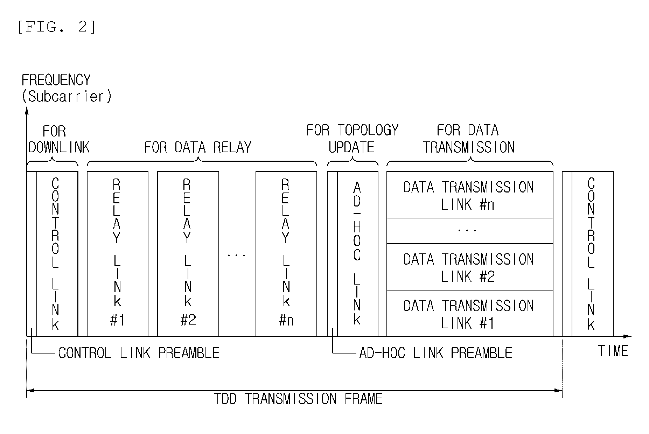

FIG. 2 shows a TDD frame architecture for multi-hop communication in the OFDMA/TDD system according to an exemplary embodiment of the present invention. One frame consists of a control link, a plurality of relay links, an ad-hoc link, and a plurality of data transmission links, as shown in FIG. 2.

The control link and the ad-hoc link are used to configure and manage a network such as a multi-hop topology update, a search of an optimal path, etc. The base station transmits information for maintaining time synchronization between the base station and the terminals through the control link and periodically transmits messages necessary to configure and operate the network to each terminal. Each terminal transmits the message necessary to configure the network through the ad-hoc link and transmits the link status information necessary to search the optimal path.

A control link preamble serves to perform the time synchronization between the base station and the terminal. The terminals receiving the control link preamble uses the same PN code to perform correlation, thereby perform the time synchronization with the base station.

An ad-hoc link preamble is a response for the control link preamble, which is transmitted from each terminal. The base station uses unique PN codes allocated to each terminal to identify transmission terminals of uplink messages and analyzes round trip time (RTT) to measure a distance between the base station and the corresponding terminals, thereby setting lead/lag time. In addition, the link status between the base station and the corresponding terminals can be measured by estimating SNRs of signals received from other terminals and the optimal multi-hop path is searched by using the link status.

The relay link is used to allow the terminals connected to the base station in the multi-hop manner to transmit data to the relay terminals. Herein, the relay terminal implies a terminal that receives data from other terminals and transmits them to another terminal or the base station. As shown in FIG. 2, the relay link has the same frequency band but different time bands, which are allocated to each terminal connected to the base station in a multi-hop manner. In this case, the plurality of relay links may be allocated to one terminal. After the base station searches the optimal multi-hop path, it allocates the relay link to each terminal and informs each terminal of the allocated relay link through the control link. For example, referring to FIG. 1, the terminals 120, 130, and 140 is connected to the base station in one-hop and the terminals 150 and 160 are connected to the base station in 2-hop. Therefore, different relay links are each allocated to the terminals 150 and 160.

The data transmission link is used to allow the terminal connected to the base station in 1-hop to transmit data to the base station. As shown, the data transmission link has the same time band and different frequency bands and is allocated to each data based on sources of data. The base station searches the optimal multi-hop path and then, informs the terminal connected to the base station in 1-hop of the allocation information of the data transmission link through the control link. For example, referring to FIG. 1, the data transmission link #1 is allocated to data in the case where the source is the terminal 130, the data transmission link #2 is allocated to data in the case where the source is the terminal 160, and the base station transmits the allocation information to the terminal 130. In this case, the terminal 130 receives data from the terminal 160 through the relay link and then, transmits its own data through the data transmission link #1 and simultaneously transmits data from the terminal 160 to the base station 110 through the data transmission link #2.

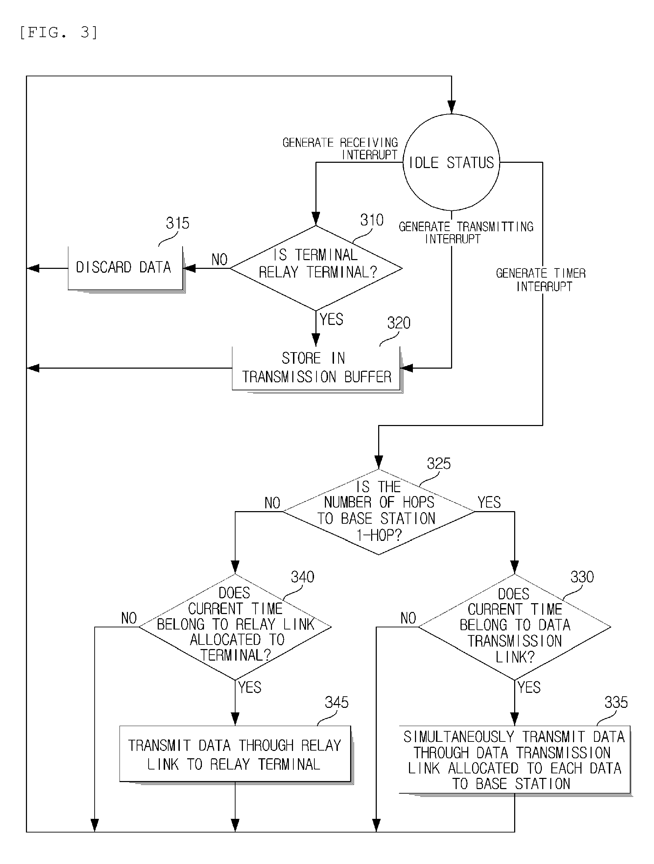

FIG. 3 is a flow chart showing a data transmission process performed in any terminal for multi-hop communication in the OFDMA/TDD system according to an exemplary embodiment of the present invention.

When the terminal is in the idle status and then, occurs the receiving interrupt, it confirms whether the terminal corresponds to the relay node (S310). The receive interrupt is generated when the data are received from the other terminals. Whether the terminal is the relay node can be confirmed through the information already received from the base station through the control link. When the terminal is confirmed as the relay node, the terminal stores the received data in a transmission buffer that is included in the terminal (S320). When it is confirmed that the terminal is not the relay node, the received data is discarded (S315).

In addition, when the terminal is in the idle status and then, generates the transmission interrupt, that is, the terminal itself generates data to be transmitted to the base station, it stores the generated data in the transmission buffer (S320).

When the terminal is in the idle status and generates a timer interrupt, it first confirms that the number of hops to the base station is 1-hop (S325). The timer interrupt is periodically generated by the timer included in the terminal and determines the timing to transmit data other terminals or base stations. The number of hops to the base station can also be confirmed through the information already received from the base station through the control link.

As the confirmation result at S325, when the number of hops to the base station is confirmed in 1-hop, it is confirmed that the current time belongs to the data transmission link (S330). In this case, each data stored in the transmission buffer is simultaneously transmitted to the base station through the data transmission link allocated to each data (that is, allocated according to the source address of data) (S335). The transmission buffer may store only data to be transmitted to the base station, only data to be received and relayed from one or more terminals, or both data to be transmitted to the base station and data received and relayed from other terminals. When S335 is performed, the transmission buffer is emptied and the terminal again returns to the idle status. At S330, if the current time does not belong to the data transmission link, it returns to an idle state again.

As the confirmation result at S325, if it is confirmed that the number of hops to the base station is not 1-hop, that is, multi-hop, it is confirmed that the current time belongs to the relay link allocated to the terminal (S340). In this case, it transmits data to the other relay terminals through the corresponding relay link (S345). When S345 is performed, the transmission buffer is emptied and the terminal returns to the idle status again. At S325, if the current time does not belong to the relay link, it returns to an idle state again.

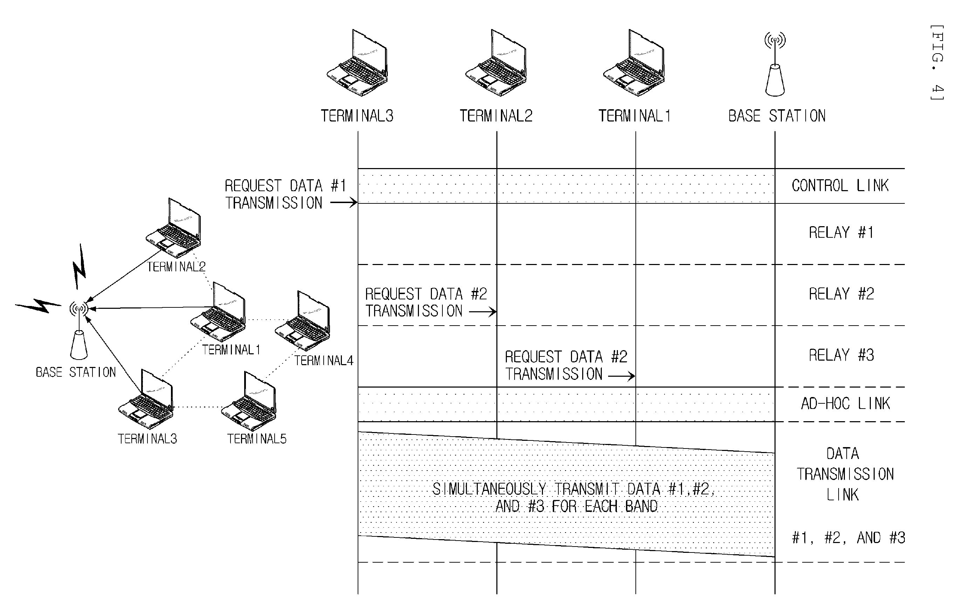

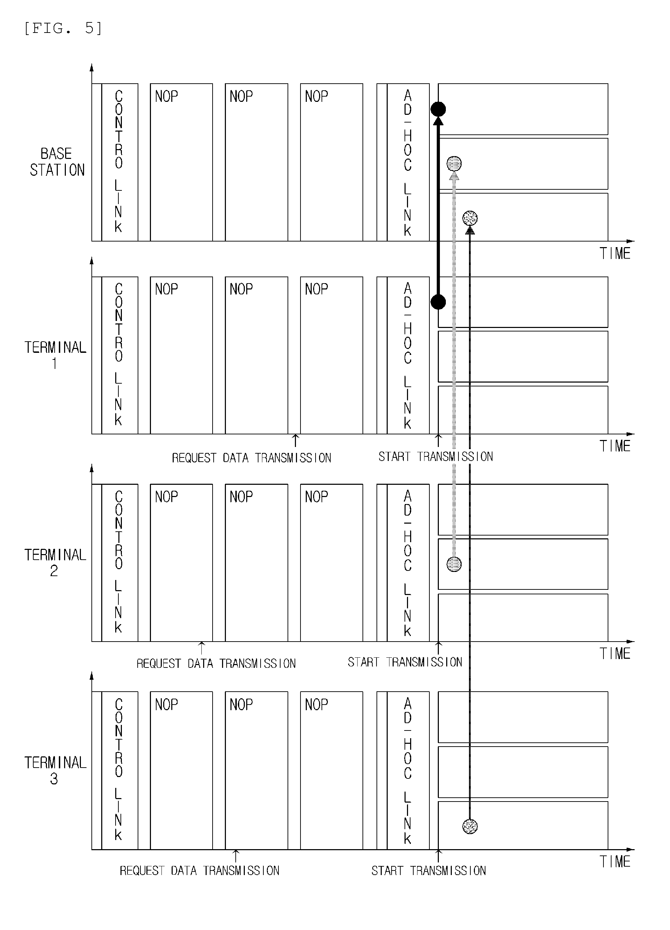

FIG. 4 is a diagram showing a process in which 1-hop communication is made according to the multi-hop communication method in the OFDMA/TDD system according to an exemplary embodiment of the present invention. FIG. 5 shows the process in a time-frequency graph. In this case, terminal 3, 2, and 1 each transmits data #1, #2, and #3 to the base station.

Referring to FIGS. 4 and 5, terminal 1, 2, and 3 each is connected with the base station in 1-hop and thus, does not use the relay link. When the data transmission request is generated from the terminal 3, 2, and 1, the terminal 3, 2, and 1 each transmits the data stored in the transmission buffer to the base station at the timing when the data transmission link starts. In this case, data is transmitted to the base station by using different data transmission links, that is, each data transmission link having the same time band and the different frequency bands.

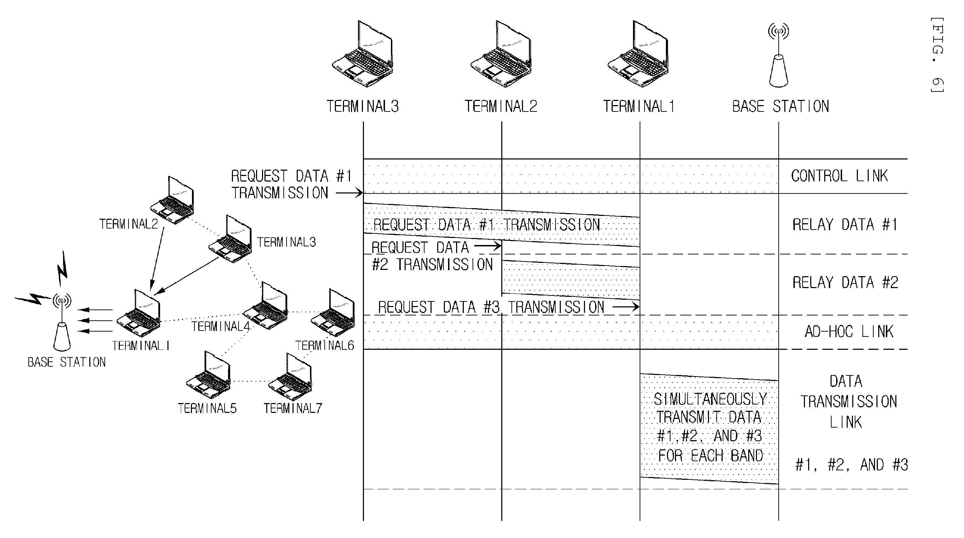

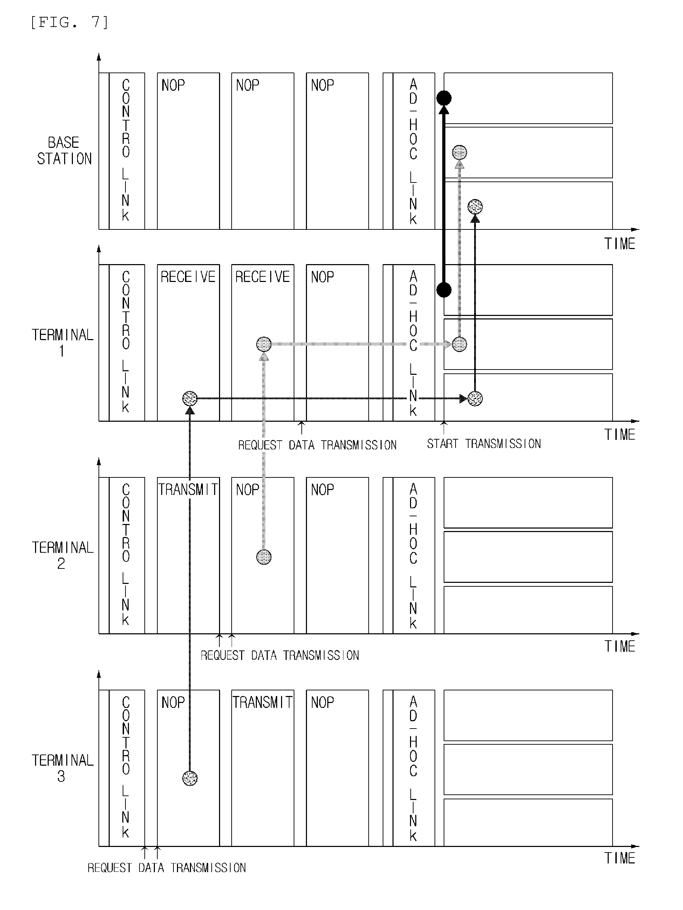

FIG. 6 is a diagram showing a process in which 2-hop communication is made according to the multi-hop communication method in the OFDMA/TDD system according to an exemplary embodiment of the present invention; and FIG. 7 shows the process in the time-frequency graph. In this case, terminal 3, 2, and 1 each transmits data #1, #2, and #3 to the base station.

Referring to FIG. 6, the terminal 1 is connected to the base station in 1-hop and the terminals 2 and 3 are connected to the base station in 2-hop. The terminal 1 corresponds to the relay terminal and the terminals 2 and 3 are each allocated with the relay links #1 and #2 from the base station.

Referring to FIGS. 6 and 7, when the transmission request of data #1 is generated from the terminal 3, the terminal 3 transmits the data #1 the relay terminal, i.e., the terminal 1 to through the relay link #1. When the transmission request of data #2 is generated from the terminal 2, the terminal 2 transmits the data #2 to the relay terminal, that is, the terminal 1 through the relay link #2. Then, the buffer of the terminal 1 is stored with the data #1 and the data #2. The terminal 1 also generates the data #3 to be transmitted to the base station and the data #3 is stored in the transmission buffer together with the data #1 and #2.

The terminal 1 simultaneously transmits the data #1, #2, and #3 each stored in the transmission buffer to the base station through the previously allocated data transmission link #1, #2, and #3 at the timing when the data transmission link starts.

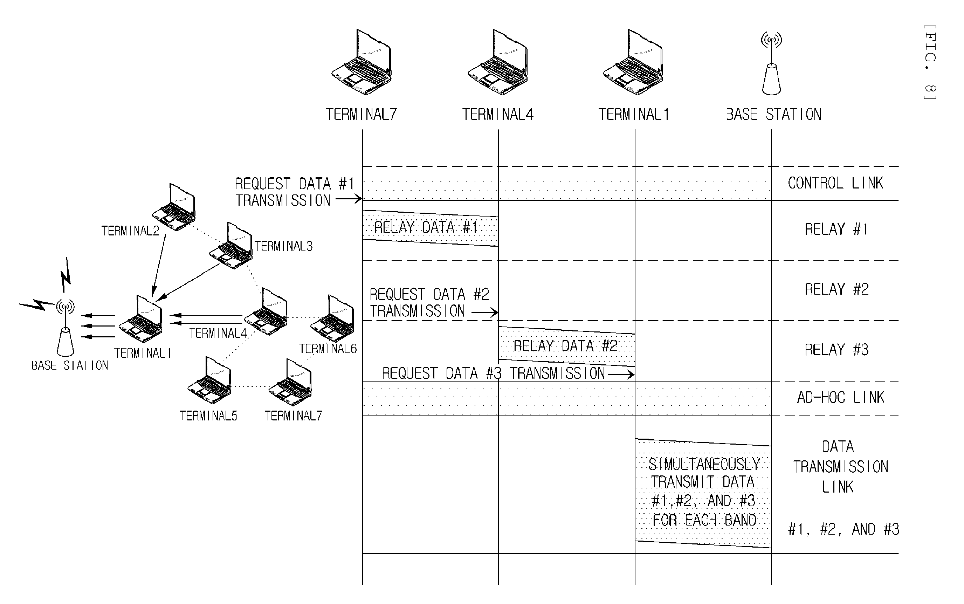

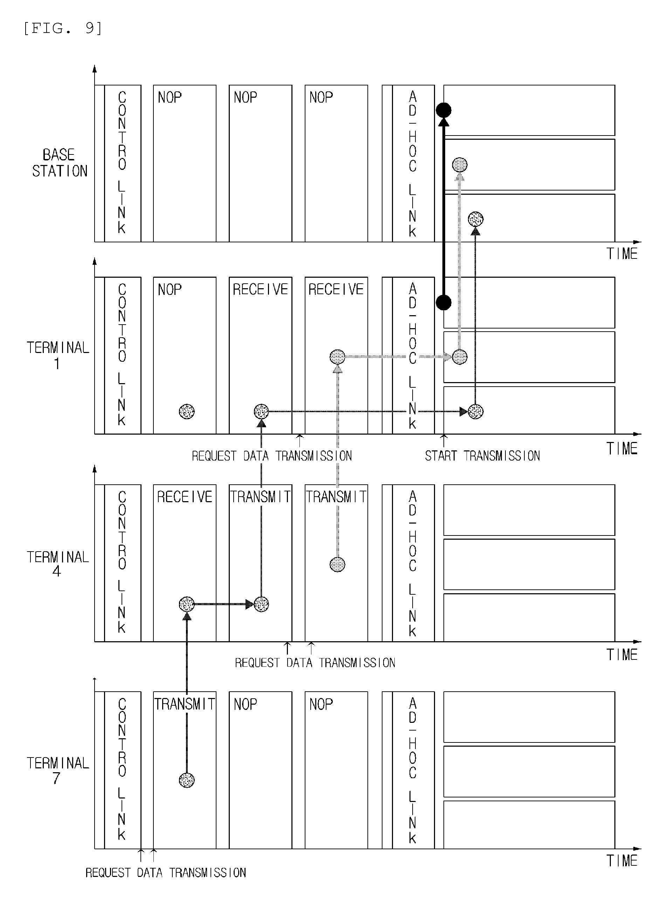

FIG. 8 is a diagram showing a process in which 3-hop communication is made according to the multi-hop communication method in the OFDMA/TDD system according to an exemplary embodiment of the present invention and FIG. 9 shows the process in a time-frequency graph. In this case, terminal 7, 4, and 1 each transmits data #1, #2, and #3 to the base station.

Referring to FIG. 8, the terminal 1 is connected to the base station in 1-hop, the terminals 4 is connected to the base station in 2-hop, and the terminal 7 is connected to the base station in 3-hop. The terminals 1 and 4 correspond to the relay terminal. The terminal 7 is allocated with the relay link #1 from the base station and the terminal 4 is allocated with the relay link #2 and #3. The terminal 4 is allocated with two relay links since it should transmit its own data and data from the terminal 7 to the terminal 1.

Referring to FIGS. 8 and 9, when the transmission request of data #1 is generated from the terminal 7, the terminal 7 transmits the data #1 the relay terminal, i.e., the terminal 4 to through the relay link #1. The data #1 is stored in the transmission buffer of the terminal 4. The terminal 4 transmits the data #1 to the terminal 1 through the relay link #2 and when it generates the transmission request of its own data #2, it transmits the data #2 to the terminal 1 through the relay link #3. The terminal 1 stores the data #1 and #2 received from the terminal 4 to the transmission buffer and when the data #3 to be transmitted to the base station is generated, the data #3 is stored in the transmitting buffer together with the data #1 and #2.

The terminal 1 simultaneously transmits the data #1, #2, and #3 each stored in the transmission buffer to the base station through the previously allocated data transmission link #1, #2, and #3 at the timing when the data transmission link starts.

The process where the 1-hop, 2-hop, and 3-hop communications are made through FIGS. 4 to 9 is described, but the communication of 4-hop or more may be made similar to the above description.

Accordingly, the exemplary embodiments disclosed in the present invention and the accompanying drawings are used not to limit but to describe the spirit of the present invention. The protection scope of the present invention must be analyzed by the appended claims and it should be analyzed that all spirits within a scope equivalent thereto are included in the appended claims of the present invention.

## Claims

1. A multi-hop communication method for an OFDMA/TDD system and a transmission method of a terminal in which a transmission frame is made including a plurality of relay links and a plurality of data transmission links, the method comprising:
(a) receiving data from other terminals through any one of the relay links and storing data in a buffer when the relay link generates data to be transmitted to a base station; and
(b) selectively transmitting the stored data to the base station through any one of the data transmission links according to the number of hops to the base station or transmitting the stored data to other terminals through other relay links among the relay links.

2. The method of claim 1, wherein the step (b) includes:
(b1) transmitting the stored data to the base station through any one data transmission link when the number of hops to the base station is 1; and
(b2) transmitting the stored data to other terminals through other relay links when the number of hops to the base station is not 1.

3. The method of claim 1, wherein the plurality of relay links have the same frequency band and different time bands.

4. The method of claim 1, wherein the plurality of data transmission links have the same time band and different frequency bands.

5. A multi-hop communication method for an OFDMA/TDD system in which a transmission frame consists of a plurality of relay links and a plurality of data transmission links, the method comprising:
(a) transmitting a first data of a first terminal to a third terminal through a first relay link by the first terminal;
(b) transmitting a second data of a second terminal to the third terminal through a second relay link by the second terminal; and
(c) transmitting each of the first data, the second data, and the third data of a third terminal to the base station through a first data transmission link, a second data transmission link, and a third data transmission link by the third terminal.

6. The method of claim 5, wherein the first relay link and the second relay link have the same frequency band and different time bands.

7. The method of claim 5, wherein the first data transmission link, the second data transmission link, and the third data transmission link have the same time band and different frequency bands.

8. A multi-hop communication method for an OFDMA/TDD system in which a transmission frame consists of a plurality of relay links and a plurality of data transmission links, the method comprising:
(a) transmitting a first data of a first terminal to a second terminal through a first relay link by the first terminal;
(b) transmitting each of the first data and the second data of the second terminal to the third terminal through a second relay link and a third relay link by the second terminal; and
(c) transmitting each of the first data, the second data, and the third data of a third terminal to the base station through a first data transmission link, a second data transmission link, and a third data transmission link by the third terminal.

9. The method of claim 8, wherein the first relay link, the second relay link, and the third relay link have the same frequency band and different time bands.

10. The method of claim 8, wherein the first data transmission link, the second data transmission link, and the third data transmission link have the same time band and different frequency bands.
